# EUROPÄISCHE PATENTANMELDUNG

(11) **EP 1 956 276 A1**
(43) Veröffentlichungstag der Anmeldung: **13.08.2008**
(21) Anmeldenummer: 08000825.3
(22) Anmeldetag: 17.01.2008
(51) Int. Cl.: F16K 3/04, F16K 11/074

(54) **Ventil mit einem Drehschieber und Rückschlagventilen**

(30) Priorität: 06.02.2007 DE 102007005774
(71) Anmelder: LuK Lamellen und Kupplungsbau Beteiligungs KG, 77815 Bühl (DE)
(72) Erfinder: Nissen, Hanjo, 77815 Bühl (DE); Staudinger, Martin, 76275 Ettlingen (DE)

(57) **Zusammenfassung**

Die Erfindung betrifft ein Ventil mit: einem verdrehbaren Drehschieber mit einem Leitungsraum, einem dem Leitungsraum zugeordneten ersten Zulauf, einer Vielzahl von Abläufen, die jeweils einzeln und abhängig von einer bestimmten Drehstellung des Drehschiebers dem Leitungsraum zuordenbar sind.

Um ein verbessertes Ventil bereitzustellen, ist der Leitungsraum über ein erstes Rückschlagventil einem ersten Druckraum zuordenbar.

## Beschreibung

Die Erfindung betrifft ein Ventil mit einem verdrehbaren Drehschieber mit einem Leitungsraum, einem dem Leitungsraum zugeordneten ersten Zulauf und einer Vielzahl von Abläufen, die jeweils einzeln und abhängig von einer bestimmten Drehstellung des Drehschiebers dem Leitungsraum zuordenbar sind.

Gattungsgemäße Ventile sind bekannt. Sie können beispielsweise zur Ansteuerung eines hydraulisch betätigten Getriebes eines Kraftfahrzeuges verwendet werden. Bei hydraulisch geschalteten Getrieben ist in der Regel einer von mehreren Hydraulikzylindern mit einem Hydraulikdruck zu beaufschlagen, wobei die anderen Zylinder drucklos bleiben. In der Regel sind die Hydraulikzylinder paarweise zu Doppelzylindern zusammengefasst, so dass durch wechselweises Beaufschlagen der Zylinder die Kolben in eine Mittelstellung oder eine von zwei Endstellungen gebracht werden können.

Aufgabe der vorliegenden Erfindung ist es, ein verbessertes Ventil, insbesondere mit einer verringerten Leckage, bereitzustellen.

Die Aufgabe ist mit einem Ventil mit einem verdrehbaren Drehschieber mit einem Leitungsraum, einem dem Leitungsraum zugeordneten ersten Zulauf, einer Vielzahl von Abläufen, die jeweils einzeln und abhängig von einer bestimmten Drehstellung des Drehschiebers dem Leitungsraum zuordenbar sind, dadurch gelöst, dass der Leitungsraum über ein erstes Rückschlagventil einem ersten Druckraum zuordenbar ist. Vorteilhaft kann ein in dem Leitungsraum herrschender Überdruck auch dem ersten Druckraum zugeführt werden. Vorteilhaft können dadurch sich in dem Druckraum entfaltende Druckkräfte bei befülltem Leitungsraum zum Aufbringen einer Dichtkraft für den Drehschieber ausgenutzt werden.

Die Aufgabe ist außerdem mit einem Ventil mit einem verdrehbaren Drehschieber mit einem Leitungsraum, einem dem Leitungsraum zugeordneten ersten Zulauf, einer Vielzahl von Abläufen, die jeweils einzeln und abhängig von einer bestimmten Drehstellung des Drehschiebers dem Leitungsraum zuordenbar sind, dadurch gelöst, dass das Ventil einen dem Drehschieber zugeordneten Zylinder aufweist, wobei der Zylinder mit einer Spielpassung in eine Bohrung des Ventils eingebracht ist. Der Zylinder kann vorteilhaft aufgrund der Spielpassung einen geringen Winkelversatz zu der Bohrung einnehmen. Dies kann vorteilhaft zum Ausgleich möglicherweise vorhandener Toleranzen ausgenutzt werden. Dazu kann sich der dem Zylinder zugeordnete Drehschieber ebenfalls leicht verwinkeln und sich dabei besser einer Dichtfläche anpassen, wodurch sich eine möglicherweise zwischen dem Drehschieber und der Dichtfläche ergebende Leckage vermieden oder zumindest auf ein Minimum reduziert werden kann.

Bevorzugte Ausführungsbeispiele des Ventils sind dadurch gekennzeichnet, dass eine obere Stirnseite des Zylinders eine erste Druckfläche bildet, wobei die erste Druckfläche und die Bohrung den ersten Druckraum begrenzen. Über die Stirnseite des Zylinders können die auf die erste Druckfläche wirkenden Druckkräfte auf den Drehschieber übertragen werden, so dass sich zwischen dem Drehschieber und der Dichtfläche ein dichtender Anlagekontakt ergibt.

Weitere bevorzugte Ausführungsbeispiele sind dadurch gekennzeichnet, dass ein den Drehschieber umgebender zweiter Druckraum über ein zweites Rückschlagventil dem ersten Druckraum und der ersten Druckfläche zuordenbar ist. Vorteilhaft kann über das zweite Rückschlagventil bei mit Druck beaufschlagtem zweitem Druckraum auch der erste Druckraum mit Druck beaufschlagt werden. Vorteilhaft ergibt sich dadurch ebenfalls eine höhere Anpresskraft des Drehschiebers und damit eine höhere Dichtigkeit.

Weitere bevorzugte Ausführungsbeispiele sind dadurch gekennzeichnet, dass das Ventil einen dem zweiten Druckraum zugeordneten zweiten Zulauf aufweist. Über den zweiten Zulauf kann der zweite Druckraum mit Druck beaufschlagt werden.

Weitere bevorzugte Ausführungsbeispiele sind dadurch gekennzeichnet, dass bei druckbeaufschlagtem erstem Zulauf und drucklosem zweitem Zulauf das erste Rückschlagventil geöffnet und das zweite Rückschlagventil geschlossen ist und umgekehrt. Die Rückschlagventile bilden vorteilhaft eine Oder-Funktion, wobei stets eines der Rückschlagventile geöffnet ist, so dass der erste Druckraum stets mit dem jeweils größeren an den Zuläufen anliegenden Druck beaufschlagbar ist.

Weitere bevorzugte Ausführungsbeispiele sind dadurch gekennzeichnet, dass der Zylinder eine umlaufende Nut zur Aufnahme eines der Bohrung und dem Zylinder dichtend zuordenbaren Gleitdichtrings aufweist. Über den Gleitdichtring, der von der Nut aufgenommen ist, kann der Zylinder trotz der Spielpassung fluiddicht in der Bohrung gelagert und können die Druckräume fluiddicht voneinander getrennt werden.

Weitere bevorzugte Ausführungsbeispiele sind dadurch gekennzeichnet, dass der Drehschieber eine der ersten Druckfläche gegenüber liegend angeordnete Dichtfläche aufweist, wobei auf die erste Druckfläche wirkende Druckkräfte eine Anpresskraft für die Dichtfläche an einem Zwischenblech eines Gehäuses des Ventils bewirken. Insbesondere über die in dem ersten Druckraum wirkenden Druckkräfte kann ein dichtender Anlagekontakt zwischen der Dichtfläche des Drehschiebers an dem Zwischenblech des Gehäuses bewirkt werden.

Weitere bevorzugte Ausführungsbeispiele sind dadurch gekennzeichnet, dass das Zwischenblech den Leitungsraum des Drehschiebers begrenzt und den ersten Zulauf sowie die Vielzahl von Abläufen aufweist. Vorteilhaft kann der Drehschieber jeweils einen Ablauf der Vielzahl von Abläufen über den Leitungsraum dem ersten Zulauf zuordnen. Hierzu kann das Zwischenblech, das den Leitungsraum begrenzt, dichtend mit der Dichtfläche des Drehschiebers in Anlagekontakt stehen und zur Realisierung der Vielzahl von Abläufen entsprechende Bohrungen aufweisen. Die Dichtfläche kann den Leitungsraum und den zweiten Druckraum fluiddicht gegeneinander abgrenzen.

Weitere bevorzugte Ausführungsbeispiele sind dadurch gekennzeichnet, dass das Zwischenblech den zweiten Zulauf aufweist. Der zweite Zulauf kann als entsprechende Bohrung, beispielsweise außerhalb eines Umkreises des Leitungsraumes ausgeführt sein. Dadurch kann der zweite Zulauf dem zweiten Druckraum zugeordnet sein.

Weitere bevorzugte Ausführungsbeispiele sind dadurch gekennzeichnet, dass das Zwischenblech den zweiten Druckraum begrenzt. Vorteilhaft kann das Zwischenblech die Bohrung verschließen, so dass sich aus der verschlossenen Bohrung der zweite Druckraum ergibt. Innerhalb der Bohrung beziehungsweise innerhalb des zweiten Druckraumes sind der Drehschieber und darin der Leitungsraum angeordnet.

Weitere Vorteile, Merkmale und Einzelheiten ergeben sich aus der nachfolgenden Beschreibung, in der unter Bezugnahme auf die Zeichnung verschiedene Ausführungsbeispiele beschrieben sind. Gleiche, funktionsgleiche und/oder ähnliche Teile sind mit gleichen Bezugszeichen versehen. Es zeigen:
- Figur 1: einen Längsschnitt eines Ventils gemäß des Standes der Technik in einem ersten Druckzustand;
- Figur 2: das in Figur 1 gezeigte Ventil in einem zweiten Druckzustand;
- Figur 3: eine dreidimensionale Ansicht von schräg oben eines Drehschiebers eines erfindungsgemäßen Ventils;
- Figur 4: einen dreidimensionalen Teilschnitt des in Figur 3 gezeigten Drehschiebers und
- Figur 5: einen weiteren dreidimensionalen Teilschnitt des in den Figuren 3 und 4 gezeigten Drehschiebers.

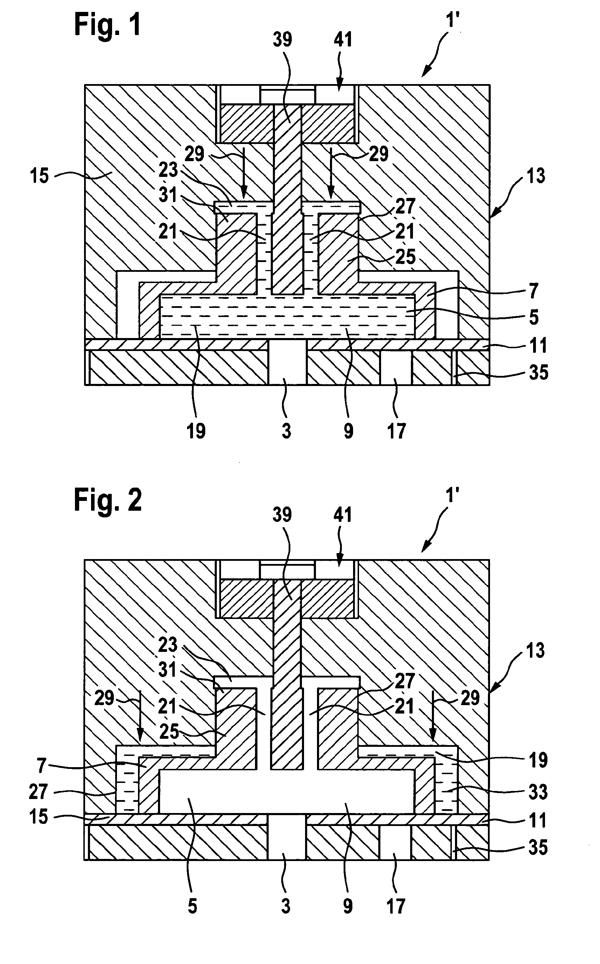

Figur 1 zeigt ein Ventil 1' gemäß Stand der Technik in einer Längsschnittdarstellung und in einem ersten Druckzustand. Figur 2 zeigt das in Figur 1 gezeigte Ventil 1', jedoch in einem zweiten Druckzustand. Das Ventil 1' weist einen ersten Zulauf 3 auf, der in einen Leitungsraum 5 des Ventils 1' mündet. Der Leitungsraum 5 wird von einem Drehschieber 7 des Ventils 1' gebildet. Genauer weist der Drehschieber 7 eine im Wesentlichen rechteckförmige Ausnehmung 9 auf, die den Leitungsraum 5 bildet.

In der Ausrichtung der Figuren 1 und 2 gesehen, wird der Leitungsraum 5 nach unten von einem Zwischenblech 11 begrenzt, das Teil eines Gehäuses 13 des Ventils 1' ist. Das Gehäuse 13 weist außerdem eine Grundplatte 15 auf, die mit dem Zwischenblech 11 zusammengefügt ist. Das Zwischenblech 11 weist den ersten Zulauf 3, beispielsweise in Form einer Bohrung, auf. Außerdem weist das Zwischenblech 11 eine Vielzahl von Abläufen auf, von denen ein Ablauf 17 in den Darstellungen gemäß Figur 1 und 2 sichtbar ist. Über den Leitungsraum 5 kann jeweils einer der Abläufe, in der Darstellung gemäß Figuren 1 und 2 der Ablauf 17, dem ersten Zulauf 3 zugeordnet werden. In der Darstellung gemäß Figur 1 wird über den ersten Zulauf 3 der Leitungsraum 5 mit Druck beaufschlagt, was mittels einer Schraffur 19 angedeutet ist.

In Figur 1 ist ersichtlich, dass der Drehschieber 7 über Durchgangsbohrungen 21 mit einem ersten Druckraum 23 in Verbindung steht. Die Durchgangsbohrungen 21' durchqueren einen oberhalb des Drehschiebers 7 angeordneten Zylinder 25, der in einer Bohrung 27 der Grundplatte 15 gelagert ist. In Figur 1 ist ersichtlich, dass an einer Stirnseite 31 des Zylinders 25 ein Druck anliegt, also eine Druckkraft ausgeübt wird, was mittels zwei Pfeilen in Figur 1 angedeutet ist. Die mittels der Pfeile 29 angedeutete Druckkraft wird über den Zylinder 25 auf den Drehschieber 7 übertragen, so dass dieser in einem dichtenden Anlagekontakt an das Zwischenblech 11 angepresst werden kann.

Es ist ersichtlich, dass sich durch die Druckkraft ein fluiddichter Leitungsraum ergibt, sofern die auf die Stirnseite 31 des Zylinders 25 wirkenden Kräfte größer sind als die auf den Leitungsraum, in Ausrichtung der Figur 1 nach oben zeigenden Kräfte. Hierzu sind die Flächenverhältnisse entsprechend zu wählen, so dass die Stirnseite 31 eine größere Fläche aufweist als eine waagerechte Innenfläche des Leitungsraumes 5.

In der Darstellung gemäß Figur 2 ist zu erkennen, dass ein zweiter Druckraum 33 existiert, der durch eine Außenfläche des Drehschiebers 7, eine Innenfläche der Bohrung 27 sowie das Zwischenblech begrenzt wird. Ebenfalls durch Pfeile 29 ist angedeutet, dass sich an einer Oberseite des Drehschiebers 7 ebenfalls eine resultierende Druckkraft, in Ausrichtung der Figur 2 gesehen, nach unten ergibt. Der zweite Druckraum 33 des Ventils 1' kann mittels eines zweiten Zulaufes 35, der in den Figuren 1 und 2 lediglich schematisch angedeutet ist, mit Druck beaufschlagt werden.

Zur Rotation des Drehschiebers 7 ist der Zylinder 25 über eine Welle 39 mit einem lediglich angedeuteten Antrieb 41 koppelbar.

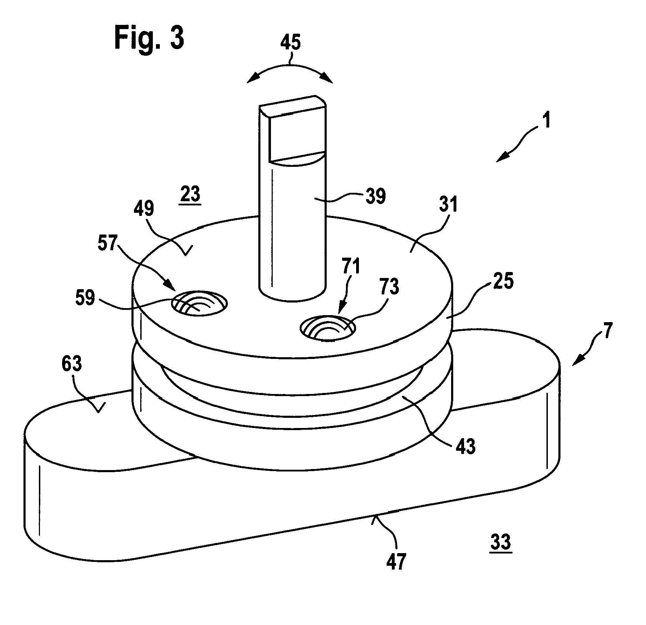

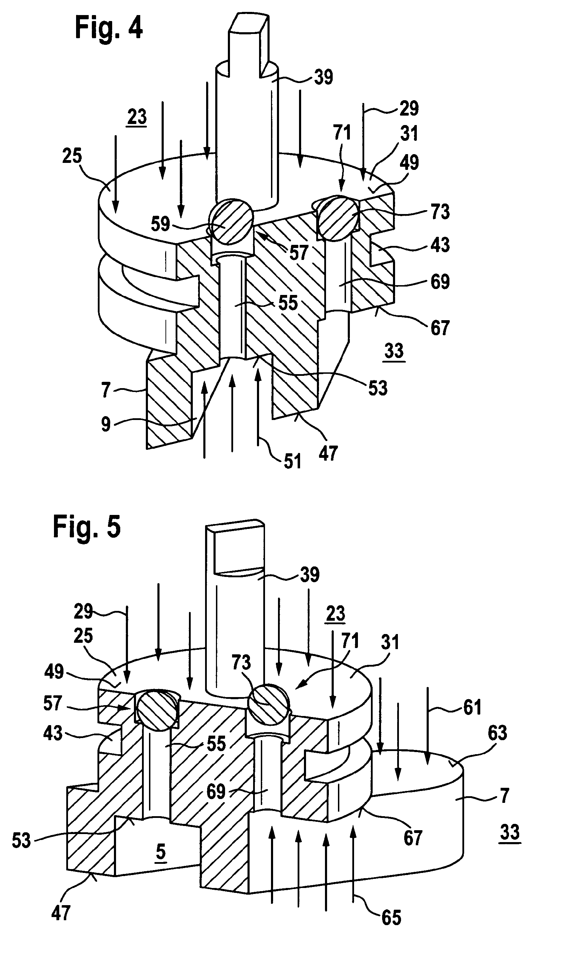

Figur 3 zeigt eine dreidimensionale Ansicht von schräg oben eines erfindungsgemäßen Drehschiebers 7 eines erfindungsgemäßen Ventils 1. Figur 4 zeigt den in Figur 3 gezeigten Drehschieber 7 in einer Teilschnittdarstellung. Figur 5 zeigt eine weitere Teilschnittdarstellung des in den Figuren 3 und 4 gezeigten Drehschiebers 7. Im Folgenden wird im Vergleich zu den Figuren 1 und 2 lediglich auf die Unterschiede zum Stand der Technik eingegangen. Im Übrigen wird auf die Beschreibung zu den Figuren 1 und 2 verwiesen.

Der mit der Welle 39 und dem Drehschieber 7 gekoppelte Zylinder 25 weist eine umlaufende Nut 43 auf. In die Nut 43 kann ein nicht näher dargestellter Dichtring eingebracht werden. Vorteilhaft kann der Dichtring zwischen der Nut 43 des Zylinders 25 und einer zylindrischen Innenwand der Bohrung 27 der Grundplatte 15 einen dichtenden Anlagekontakt herstellen. Vorteilhaft ist es daher möglich, den Zylinder 25 in der Bohrung 27 als Spielpassung einzubringen und die Dichtheit mittels des nicht näher dargestellten Dichtrings herzustellen. Eine fluiddichte Passung wie beim Stand der Technik ist nicht erforderlich. Dadurch ist es möglich, den Drehschieber 7 beziehungsweise die gesamte Anordnung aus Drehschieber 7, Zylinder 25 und Welle 39 geringfügig innerhalb der Bohrung 27 zu verkippen, was durch einen gekrümmten Doppelpfeil 45 in Figur 3 angedeutet ist.

Vorteilhaft kann so der Drehschieber 7 beziehungsweise eine Dichtfläche 47 des Drehschiebers 7 exakter an das in den Figuren 3 bis 5 nicht näher dargestellte Zwischenblech des Ventils 1 angelegt werden. Geringfügige Toleranzen beim Zusammenfügen der Grundplatte 15 mit dem Zwischenblech 11 und/oder der Bohrung 27 der Grundplatte 15 können also durch die leichte Verkippung des Drehschiebers 7 relativ zur Mittelachse der Bohrung 27 kompensiert werden. Mithin ergibt sich ein besser dichtender Anlagekontakt der Dichtfläche 47 des Drehschiebers 7 an dem Zwischenblech 11.

In Figur 4 deuten Pfeile 29 eine auf eine erste Druckfläche 49 der Stirnseite 31 des Zylinders 25 wirkende Druckkraft an. Diese Druckkraft ist nach unten gerichtet und bewirkt ein Anpressen des Drehschiebers 7 an der Grundplatte 15. Mittels Pfeilen 51 ist eine entgegen gerichtete Druckkraft, die auf eine zweite Druckfläche 53 des Leitungsraumes 5 wirkt, angedeutet. Die erste Druckfläche 49 ist gegenüberliegend der zweiten Druckfläche 53 und der Dichtfläche 47 angeordnet. Zur Auslegung des Ventils 1 ist die erste Druckfläche 49 größer zu gestalten als die zweite Druckfläche 53.

Im Unterschied zur Darstellung gemäß den Figuren 1 und 2 ist der Leitungsraum 5 über eine erste Bohrung 55 sowie ein in die erste Bohrung 55 eingebrachtes erstes Rückschlagventil 57 mit dem ersten Druckraum 23 gekoppelt. Die erste Bohrung 55 ist dazu als Stufenbohrung ausgeführt, wobei eine Stufe der ersten Bohrung 55 als Kugelsitz für eine Kugel 59 des ersten Rückschlagventils 57 dient. Das erste Rückschlagventil 57 ist also so ausgelegt, dass sich die Kugel 59 anhebt und damit die erste Bohrung 55 freigibt, sobald in dem Leitungsraum 5 ein höherer Druck herrscht als in dem ersten Druckraum 23.

Es ist ersichtlich, dass sich durch die Verbindung mittels der ersten Bohrung 55 und dem ersten Rückschlagventil 57 dieselben Druckverhältnisse ergeben wie beim Stand der Technik gemäß Figur 1.

Figur 5 zeigt den Drehschieber 7 bei dem zweiten Druckverhältnis, analog der Darstellung gemäß Figur 2. Dabei ist der zweite Druckraum 33 über den zweiten Zulauf 35 mit Druck beaufschlagt. Mittels Pfeilen 61 ist angedeutet, dass auf eine Oberseite beziehungsweise auf eine dritte Druckfläche 63 des Drehschiebers 7, in Ausrichtung der Figur 5 gesehen, nach unten gerichtete Druckkräfte wirken. Den mittels der Pfeile 61 angedeuteten Druckkräften wirken mittels Pfeilen 65 angedeutete Druckkräfte entgegen, die an einer Unterseite beziehungsweise an einer vierten Druckfläche 67 des Zylinders 25 anliegen.

Grundsätzlich ist es wünschenswert, die dritte Druckfläche 63 größer auszulegen als die vierte Druckfläche 67, so dass sich eine, in Ausrichtung der Figur 5 gesehen, resultierende Kraft nach unten ergibt, so dass der Drehschieber 7 sicher an das Zwischenblech 11 angepresst werden kann. Vorteilhaft ist jedoch gemäß der Darstellung in Figur 5 der zweite Druckraum 33 über eine zweite Bohrung 69 und ein zweites Rückschlagventil 71 mit dem ersten Druckraum 23 gekoppelt. Die zweite Bohrung 69 ist analog der ersten Bohrung 55 ausgeführt, so dass auf die dazugehörige Beschreibung verwiesen wird. Das zweite Rückschlagventil 71 weist ebenfalls eine Kugel 73 auf und ist geöffnet, sobald sich in dem zweiten Druckraum 33 ein höherer Druck ergibt als im ersten Druckraum 23.

Bei den Druckverhältnissen, wie in Figur 5 dargestellt, ist vorteilhaft das zweite Rückschlagventil 71 geöffnet und das erste Rückschlagventil 57 geschlossen. Das erste Rückschlagventil 57 verhindert also ein unerwünschtes Einströmen von Fluid in den Leitungsraum 5, von dem zweiten Zulauf 35 herkommend. Es ist ersichtlich, dass durch die Schaltung der Rückschlagventile 57 und 71 zusätzlich die erste Druckfläche 49 mit dem über den zweiten Zulauf 35 gelieferten Druck beaufschlagt werden kann, so dass sich eine zusätzliche nach unten gerichtete Kraft zum Anpressen des Drehschiebers 7 an das Zwischenblech 11 ergibt, was mittels der Pfeile 29 in Figur 5 symbolisiert ist.

Die beiden Druckverhältnisse, analog den Figuren 4 und 5 können durch ein nicht näher dargestelltes Schaltrichtungsventil, das dem Drehschieber 7 vorgelagert ist, eingestellt werden. Wird der Druck in das Innere des Drehschiebers 7, also in den Leitungsraum 5 geschaltet - Druckverhältnisse wie in Figur 4 dargestellt -, so bedingt dies gleichzeitig, dass der zweite Druckraum 33 drucklos geschaltet ist. Der Druck liegt aufgrund der ersten Bohrung 55 und der zweiten Bohrung 69 an der ersten Druckfläche 49 und an der zweiten Druckfläche 53 an. Die Flächen sind so ausgelegt, dass die resultierende Kraft in Richtung Zwischenblech 11 weist. Hierzu ist die erste Druckfläche 49 größer auszulegen als die zweite Druckfläche 53.

Mithin sorgt der Drehschieber 7 damit selbst für seine Abdichtung, also für die Anpressung der Dichtfläche 47 an dem Zwischenblech 11. Bei den Druckverhältnissen gemäß Figur 5 liegt der Druck an den Druckflächen 63 und 67 an. In diesem Fall ist der Leitungsraum durch das nicht näher dargestellte Schaltrichtungsventil drucklos geschaltet. Vorteilhaft kann über die Verschaltung mittels der Rückschlagventile 57 und 71 der Druck auch an der ersten Druckfläche 49 anliegen, wodurch sich die Anpressung des Drehschiebers 7 an dem Zwischenblech 11 verbessert. Insbesondere ist es dadurch auch möglich den Durchmesser des Zylinders 25 zu vergrößern, ohne ein Abheben des Drehschiebers 7 wegen der dadurch vergrößerten vierten Druckfläche 67 zu verursachen.

Vorteilhaft bilden die Rückschlagventile 57 und 71 ein Oder-Glied, wobei die erste Druckfläche 49 bei beiden Druckverhältnissen mit Druck beaufschlagbar ist. Hierdurch kann die Anpressung des Drehschiebers verbessert werden. Außerdem kann durch die Spielpassung des Zylinders 25 in der Bohrung 27 erreicht werden, dass der Drehschieber 7 sich leicht in der Führung verkippen kann, um so einen eventuellen Winkligkeitsfehler ausgleichen zu können.

Vorteilhaft kann zusätzlich der Durchmesser des mit der umlaufenden Nut 43 versehenen Zylinders 25 vergrößert werden, wodurch sich auch die erste Druckfläche 49 und mithin die resultierende nach unten wirkende Druckkraft, vergrößert. Bei den Bohrungen 55 und 69 handelt es sich um flach gesenkte Bohrungen, die die Kugeln 59 und 73 zur Realisierung der Rückschlagventilfunktion aufnehmen können. In der umlaufenden Nut 43 kann eine Gleitdichtung, die in den Figuren 3 bis 5 nicht näher dargestellt ist, eingearbeitet werden.

Die Stirnseite 31 des Zylinders 25 bildet die erste Druckfläche 49. Sobald der Leitungsraum 5 innerhalb des Drehschiebers 7 mit einem Druck beaufschlagt wird, so hebt sich die Kugel 59 des ersten Rückschlagventils 57 und gibt die erste Druckfläche 49 für den anliegenden Öldruck frei. Die Kugel 73 des zweiten Rückschlagventils 71 wird hingegen durch den anliegenden Druck beziehungsweise den drucklosen zweiten Druckraum 33 in den Kugelsitz gepresst und verschließt damit die zweite Bohrung 69. Vorteilhaft ergibt sich dadurch gegenüber dem Stand der Technik, insbesondere gemäß den Figuren 1 und 2, eine größere axiale Kraft zur Anpressung des Drehschiebers 7 an das Zwischenblech 11, in Ausrichtung der Figuren 3 bis 5 gesehen, nach unten wirkend. Diese vergrößerte axiale Kraft kann zusätzlich durch eine Vergrößerung des Durchmessers des Zylinders 25 erhöht werden.

Bei den Druckverhältnissen gemäß Figur 5 sorgte gemäß Stand der Technik gemäß Figur 2 bisher nur die dritte Druckfläche 63 für die entsprechende nach unten wirkende Anpresskraft. Dieser Anpresskraft entgegenwirkend sind die an der vierten Druckfläche 67 anliegenden Druckkräfte. Vorteilhaft kann durch die Verschaltung der Rückschlagventile 57 und 71 trotz des vergrößerten Durchmessers des Zylinders 25, durch die zusätzlich an der ersten Druckfläche 49 anliegende Druckkraft, eine größere nach unten wirkende Anpresskraft erreicht werden.

Die Ventilfunktion der Rückschlagventile 57 und 71 stellt eine Oder-Schaltung dar, weil bei anliegendem Druck stets eine der beiden Bohrungen 55 und 69 geöffnet ist. Durch dieses Oder-Glied kann die erste Druckfläche 49 der Stirnseite 31 des Zylinders 25 von beiden Drücken als Wirkfläche für eine Anpressung des Drehschiebers 7 an das Zwischenblech 11 genutzt werden. Die höhere Anpresskraft garantiert eine bessere Anpressung und damit eine geringere Leckage in beiden Druckstellungen. Eine weitere Maßnahme, die für eine bessere Abdichtung bei leichtem Winkelversatz der Bohrung 27, ausgelegt zur Aufnahme des Drehschiebers 7, des Zylinders 25 und der Welle 39, sorgt, ist die Verwendung des nicht näher dargestellten Gleitdichtrings in der umlaufenden Nut 43.

Im Vergleich zum Stand der Technik gemäß der Figuren 1 und 2 wird der Zylinder 25 im Gegensatz nicht als Passung, sondern im Durchmesser um beispielsweise 0,2 mm kleiner als die Bohrung 27 ausgeführt, in der er läuft. Dadurch erhält der Drehschieber 7 die Möglichkeit, minimal in der Bohrung 27 zu verkippen. Dies ermöglicht dem Drehschieber 7, eine eventuell auftretende Verkippung der Bohrung 27 auszugleichen und damit stets plan auf dem Zwischenblech 11 aufzuliegen. Da der Umfang des Zylinders 25 zur Trennung des ersten Druckraums 23 und des zweiten Druckraums 33 dient, also eine dichtende Funktion übernehmen muss, kann in die Nut 43 der nicht näher dargestellte Gleitdichtring eingefügt werden. Der Gleitdichtring gewährleistet vorteilhaft die Abdichtung am Umfang des Zylinders 25 gegenüber der Bohrung 27 in beiden Druckrichtungen.

### Bezugszeichenliste

| | | | |
|---|---|---|---|
| 1' | Ventil | 39 | Welle |
| 1 | Ventil | 41 | Antrieb |
| 3 | erster Zulauf | 43 | Nut |
| 5 | Leitungsraum | 45 | gekrümmter Doppelpfeil |
| 7 | Drehschieber | 47 | Dichtfläche |
| 9 | Ausnehmung | 49 | erste Druckfläche |
| 11 | Zwischenblech | 51 | Pfeile |
| 13 | Gehäuse | 53 | zweite Druckfläche |
| 15 | Grundplatte | 55 | erste Bohrung |
| 17 | Ablauf | 57 | erstes Rückschlagventil |
| 19 | Schraffur | 59 | Kugel |
| 21 | Durchgangsbohrung | 61 | Pfeile |
| 23 | erster Druckraum | 63 | dritte Druckfläche |
| 25 | Zylinder | 65 | Pfeile |
| 27 | Bohrung | 67 | vierte Druckfläche |
| 29 | Pfeile | 69 | zweite Bohrung |
| 31 | Stirnseite | 71 | zweites Rückschlagventil |
| 33 | zweiter Druckraum | 73 | Kugel |
| 35 | zweiter Zulauf | | |

## Patentansprüche

1. Ventil (1) mit:
- einem verdrehbaren Drehschieber (7) mit einem Leitungsraum (5),
- einem dem Leitungsraum (5) zugeordneten ersten Zulauf (3),
- einer Vielzahl von Abläufen (17), die jeweils einzeln und abhängig von einer bestimmten Drehstellung des Drehschiebers (7) dem Leitungsraum (5) zuordenbar sind,
**dadurch gekennzeichnet, dass** der Leitungsraum (5) über ein erstes Rückschlagventil (57) einem ersten Druckraum (23) zuordenbar ist.

2. Ventil (1) nach dem Oberbegriff des Anspruchs 1, insbesondere nach Anspruch 1, **gekennzeichnet durch** einen dem Drehschieber (7) zugeordneten Zylinder (25), wobei der Zylinder (25) mit einer Spielpassung in eine Bohrung (27) des Ventils (1) eingebracht ist.

3. Ventil nach dem vorhergehenden Anspruch, **dadurch gekennzeichnet, dass** eine obere Stirnseite (31) des Zylinders (25) eine erste Druckfläche (49) bildet, wobei die erste Druckfläche (49) und die Bohrung (27) den ersten Druckraum (23) begrenzen.

4. Ventil nach einem der vorhergehenden Ansprüche, **dadurch gekennzeichnet, dass** ein den Drehschieber (7) umgebender zweiter Druckraum (33) über ein zweites Rückschlagventil (71) dem ersten Druckraum (23) und der ersten Druckfläche (49) zuordenbar ist.

5. Ventil nach dem vorhergehenden Anspruch, **gekennzeichnet durch** einen dem zweiten Druckraum (33) zugeordneten zweiten Zulauf (35).

6. Ventil nach dem vorhergehenden Anspruch, **dadurch gekennzeichnet, dass** bei druckbeaufschlagtem erstem Zulauf (3) und bei drucklosem zweitem Zulauf (35) das erste Rückschlagventil (57) geöffnet und das zweite Rückschlagventil (71) geschlossen ist, und umgekehrt.

7. Ventil nach einem der Ansprüche 2 bis 6, **dadurch gekennzeichnet, dass** der Zylinder (25) eine umlaufende Nut (43) zur Aufnahme eines der Bohrung (27) und dem Zylinder (25) dichtend zuordenbaren Gleitdichtrings aufweist.

8. Ventil nach einem der Ansprüche 3 bis 7, **dadurch gekennzeichnet, dass** der Drehschieber (7) eine der ersten Druckfläche (49) gegenüberliegend angeordnete Dichtfläche (47) aufweist, wobei auf die erste Druckfläche (49) wirkende Druckkräfte eine Anpresskraft für die Dichtfläche (47) an einem Zwischenblech (11) eines Gehäuses (13) des Ventils (1) bewirken.

9. Ventil nach dem vorhergehenden Anspruch, **dadurch gekennzeichnet, dass** das Zwischenblech (11) den Leitungsraum (5) des Drehschiebers (7) begrenzt und den ersten Zulauf (3) sowie die Vielzahl von Abläufen (17) aufweist.

10. Ventil nach einem der vorhergehenden zwei Ansprüche, **dadurch gekennzeichnet, dass** das Zwischenblech (11) den zweiten Zulauf (35) aufweist.

11. Ventil nach einem der vorhergehenden drei Ansprüche, **dadurch gekennzeichnet, dass** das Zwischenblech (11) den zweiten Druckraum (33) begrenzt.

12. Verwendung eines Ventils (1) nach einem der vorhergehenden Ansprüche in einem hydraulischen System eines hydraulischen Schaltgetriebes.
